# EUROPEAN PATENT SPECIFICATION

(11) **EP 2 141 405 B1**
(45) Date of publication and mention of the grant of the patent: **27.04.2011**
(21) Application number: 09388004.5
(22) Date of filing: 27.02.2009
(51) Int. Cl.: F16L 55/165

(54) **Method of renovating a pipeline by using a liner and a transparent tape**
Verfahren zum Erneuern einer Rohrleitung durch Verwendung einer Auskleidung und eines transparenten Bandes
Procédé de rénovation pour conduite utilisant un revêtement et une bande transparente

(43) Date of publication of application: 06.01.2010
(73) Proprietor: Per Aarsleff A/S, 8230 Abyhoj (DK)
(72) Inventor: Lystbæk, Peter Tang, 8300 Odder (DK); Moeskjær, Ole, 8260 Viby (DK)
(74) Representative: Nielsen, Henrik Sten

(56) References cited:
- DE-A1-102004 002 578
- US-A1- 2006 254 711

## Description

The present invention relates to a method of renovating a pipeline by using a cured-in-place resin-impregnated liner, which is sealed by a transparent tape for sealing the liner prior to resin impregnation.

Pipelines are commonly used to transport fluids over a long distance. Faulty pipeline systems may be renovated trenchlessly by introducing a lining tube into the pipeline. The lining tube, hereafter referred to as a liner, may be placed inside the faulty pipeline so that the inner walls of the pipeline are completely covered by the liner. The liner may be used to repair faults and voids such as leakage by sealing the pipeline walls by allying the liner to the walls of the pipeline. After the liner has been cured, the pipeline may be utilized again for its intended purpose. Leaking pipelines may constitute a hazard for the environment and for personal health, since contaminated and/or dangerous fluids may escape from the pipeline into the surrounding outside environment. Alternatively, the liner may be used preventively to repair worn, damaged or badly maintained pipelines to prevent further damage, which would eventually lead to a leakage.

The lining technology may be used on any pipeline system such as gas pipelines, water pipelines, etc. The pipelines may have any orientation, such as e.g. vertical or horizontal. Further, the location of the pipeline may be e.g. either below ground or above ground, indoor or outdoor, in private buildings or in industrial environments. The liner may be installed by simply pulling it into place inside the pipeline, or by using eversion. By eversion is meant the technology of fastening one end of the liner onto a lining device at the manhole and subsequently inverting the liner into the pipeline by the use of water or pressurized gas.

The major advantage of the above technology is achieved in connection with underground pipelines, such as sewer pipelines. The renovation may be performed quickly and trenchlessly with minimum inconvenience to the surroundings and considerably less time consumption compared to a complete replacement of the pipeline.

The liner is preferably made of a soft and flexible material, which is easy to package and transport to the installation site and which may be inserted into the pipeline system from the outside through e.g. a manhole or the like. When the liner is put in place inside the pipeline system it should be hardened for maximum stability. The liner is therefore preferably made from a continuous flat and fibrous web material, which is film-coated with a non-porous material exhibiting fluid-tight properties. The coating typically has a thickness of about 0.4-1 mm and is pressure-tight to about 2 bar. The coating may be adhering to the web, or be provided as a separate film. The fibrous web material may be a woven or non-woven material and may e.g. be of any of the following types: glass, carbon, aramid, polyester, polyacrylonitrile, mineral, viscose, polyamide, polyacrylic or natural fibres or a combination of the above. The liner is formed by folding the web material so that two opposing side edges are adjacent, and by stitching the side edges together so that they are permanently joined for achieving the liner.

The fibrous material of the liner is subsequently impregnated with a curable resin, such as styrene/polyester or styrene-free polyester, styrene/vinylester or styrene-free vinylester, vinylester urethane, furan, phenol, water glass, epoxy, methacrylate, isocyanate or the like. The resin should be curable by application of heat or electromagnetic radiation, e.g. UV radiation or visible light such as blue light, for an irreversible transition from a soft and flexible state into a hardened state. The fibrous material may be e.g. a glass fibre material or felt material, which is flexible and at the same time may hold a large quantity of resin. The material should exhibit affinity to the resin to allow the resin to soak the liner completely. The liner is typically impregnated by submerging the liner in a resin bath or alternatively by attaching a vacuum source to the liner for introducing resin into the liner by suction, such as described in US 4,366,012. When the liner is submerged, the resin will enter the fibre material structure of the liner, so that the liner is soaked with resin. Thereafter the resin may be partially cured to achieve the soft and flexible state and avoid resin leaking from the liner. The outer surface of the liner is usually pre-coated with a fluid-tight material for avoiding leakage of resin though the fibrous material of the liner. One example of a liner may be found in the European patent application EP1 959 183. An example of a curing apparatus for curing an impregnated liner by the use of LED may be found in the international patent application WO 2008/101499. An example of a photo-curable resin suitable for the purpose of impregnating a liner is found in the international patent application W02005/103121.

In the present context it has been found out that the stitched area of the liner is not fully fluid-tight, since the stitching leaves tiny holes in the liner and in the coating resulting from needle holes, and additionally the stitched area itself between the opposing edged allows fluid passage. The small holes left after the stitching may lead to small amounts of resin leaking through the liner, which is not desirable. Therefore the stitched area of the liner must be covered and sealed by applying and fixating a fluid-tight tape continuously over the stitched area. The European patent EP 0 958 128 describes a plastic strip which may be used for sealing a seam. The strip has an inner layer and an outer layer, which are heat-welded onto the seam by applying electromagnetic radiation. The inner layer has inclusions, which are responsive to electromagnetic radiation, and when the strip is irradiated the inner layer melts and bonds to the outer layer and to the seam. Typically, carbon black is used for the inner layer to make the inner layer substantially non-transparent and absorbing to radiation. Reference is made to all of the above-mentioned documents and they are hereby incorporated in the present specification by reference.

In the present context a problem has been revealed by using the above tape together with inverted liner impregnated by an electromagnetic radiation-curable resin. When the liner is being inverted, the outer surface having the coating and the tape attached will become the inner surface after inversion. When using a non-transparent tape, the stitched area, which is as well drenched in resin, will not be cured since this part of the liner is not reachable for the electromagnetic radiation due to the tape covering the seam. If the seam is not cured but merely covered by the tape the structural stability and the fluid-tight properties at the location of the seam will be significantly lower. Since the tape is applied separately, the structural stability of the tape is considerably lower than that of the cured liner. During curing of the liner, the tape will absorb the incoming electromagnetic radiation and may occasionally separate from the liner, exposing the seam. In case the tape separates or falls off the liner, the stitched area will be exposed and a void will be present in the liner and thereby in the pipeline. Such separation will cause a void in the liner since the seam part of the liner, which is located behind the tape, is not properly cured and in addition not fluid-tight due to the above-mentioned stitching. Additionally, the use of multi-layered tape increases the risk of delamination, i.e. the outer layer separating from the inner layer. Such separation would lead to leakage and possibly structural damage to the liner. There is consequently a need for technologies for improving the sealing of the seam in liners.

It is an object according to the present invention to provide methods of renovating a pipeline without any of the above-mentioned drawbacks in relation to the sealing of the seams of the liners.

The above need and the above object together with numerous other needs and objects which will be evident from the below detailed description, are according to a first aspect of the present invention obtained by a method of renovating a pipeline having a pipeline inner surface, comprising the following steps:
providing a continuous web assembly including a web of fibrous material and a fluid-impermeable surface coating or foil of a first polymeric material, the web assembly being flat and defining a first surface defined by the web and an opposite second surface defined by the coating or foil, the web assembly defining a first edge and an opposite second edge,
folding the web assembly by positioning the first and second edges adjacent each other to form a tubular liner, the first surface constituting the inner surface of the tubular liner and the second surface constituting the outer surface of the tubular liner,
joining and stitching the first and second edges together, thereby establishing a continuous stitched area bridging the first and second edges,
providing a flexible and fluid-impermeable tape of a second polymeric material compatible with the first polymeric material and having a fixation surface being capable of a first phase transition from solid to liquid state by irradiation of electromagnetic radiation of a first wavelength or a first wavelength range and being capable of a second phase transition from liquid to solid state when allowed to cool, the tape being at least transparent to electromagnetic radiation of the first wavelength or the first wavelength range, the tape and the fixation surface after the second phase transition being at least transparent to electromagnetic radiation of a second wavelength or wavelength range,
applying the tape to the second surface, the fixation surface facing the second surface and covering the continuous stitched area,
irradiating the tape with electromagnetic radiation of the first wavelength or the first wavelength range for causing the first phase transition and permanently fixating the tape to the coating or foil by causing the second phase transition,
impregnating the liner by a resin, the resin being curable by irradiation of electromagnetic radiation of the second wavelength or wavelength range,
inverting the liner into the pipeline by contacting the first surface constituting the outer surface of the liner after the inversion to the pipeline inner surface, and
irradiating the second surface of the liner constituting the inner surface of the liner after the inversion with electromagnetic radiation of the second wavelength or the second wavelength range.

When the liner is being installed in the pipeline, typically the eversion technology described above is employed. The liner is attached to a lining device, which will be described in detail later, at the entry location of the pipeline, such as at a manhole. The liner is subsequently inverted into the pipeline by the use of the lining device and caused to contact the inner walls of the pipeline by applying pressurized fluid, preferably compressed air. In the inversion process the original outer surface of the liner becomes the inner surface, and vice versa. In the present context, the inner surface before inversion, which is the outer surface after inversion, is designated the first surface and the opposite outer surface before inversion and inner surface after inversion is designated the second surface. The tape is applied on the second surface of the liner, which is pre-coated with a non-fluid permeable layer, such as a plastic film, for allowing the first surface facing the interior of the liner to be soaked with resin.

When the liner has been inverted to its final position inside the pipeline, the liner is being cured by introducing a movable electromagnetic radiation source into the pipeline. The movable electromagnetic radiation source may be e.g. the curing apparatus, which is described in WO 2008/101499. The movable electromagnetic radiation source irradiates the inner surface, i.e. the second surface, of the liner with electromagnetic radiation of the second wavelength or wavelength range. The second wavelength or wavelength range is preferably different from the first wavelength or wavelength range for avoiding heating of the fixation surface of the tape. Re-heating of the fixation surface of the tape may lead to undesired "double curing" of the tape, which may result in delamination. (It is understood that the fixation surface will heat up slightly due to heat conduction from the heated liner, however such heating should not be regarded as double curing). Preferably, the movable electromagnetic irradiation source is a source of a single wavelength, such as a diode or laser, since the wavelength of the electromagnetic source may then be optimized in relation to the irradiative absorption of the resin and the irradiative transmission of the tape and fixation surface, however, broadband irradiation sources may be used in some cases. In the present context it has been surprisingly found that by providing the tape, which is transparent to electromagnetic radiation of the second wavelength, the resin inside the stitched area and the portion of the liner being covered by the tape will be sufficiently cured. Since the tape is transparent, electromagnetic radiation of the second wavelength will be able to penetrate the tape substantially loss-free and reach the liner for the stitched area of the liner to cure the complete liner uniformly. Thereby the stitched area will assume the same structural stability and fluid-tightness as the rest of the liner.

Transparent is in the present context understood to mean transmissible or translucent to a major portion of the incoming electromagnetic radiation, i.e. in the present context a major portion of the second wavelength or wavelength range may be transmitted through the tape. Typically, but not necessarily, the tape will be transparent or at least translucent for electromagnetic radiation of the visible spectrum. It is contemplated that all transparent materials have a certain absorbance as well as reflectance of radiation and thus tapes absorbing 10-40% of the incoming radiation should still be regarded as transparent. The tape will only absorb a small portion of the incoming electromagnetic radiation of the second wavelength and will thus remain substantially unheated. Thus, the risk of separation between the tape and the seam area is effectively eliminated. Additionally, the harmful double curing, i.e. the exposure to the same electromagnetic radiation two subsequent times, is avoided by choosing two different wavelengths or wavelength ranges. If electromagnetic radiation of the same wavelength is used for both curing the resin inside the liner and melting the tape, the tape would be exhibited to electromagnetic radiation a second time when the resin is being cured, which might result in additional hardening and degradation of the tape.

In some embodiments, the tape may be transparent to the visible and UV spectrum only, and in other embodiments the tape is transparent to UV and/or IR and opaque for visible radiation. The fixation surface should be at least substantially absorbent to at least the first wavelength or first wavelength range of electromagnetic radiation for allowing the fixation surface to melt during exposure. The purpose of the radiation-absorbing material is to absorb electromagnetic radiation of the first wavelength or wavelength range during fixation of the tape after the tape has been applied on the liner. The tape should be applied to the liner so that the fixation surface is adjacent the stitched area. When the tape is irradiated with the first wavelength or first wavelength range, the fixation surface contacting the liner will melt, i.e. undergo a phase change from solid to liquid. The coating of the liner may as well melt, at least partly. The polymeric materials of the coating and of the tape should be compatible, i.e. should be allowed to merge when molten and subsequently be allowed to cool for the tape and coating to be permanently merged and sealed to each other, a process commonly known as welding. By compatible is understood that the materials of the tape and the coating should be coalescent when in liquid phase. By the phase transitions, the tape and the coating should merge to form a weld, which is preferably of the same quality and rigidity as the rest of the coating and tape. The plastic material of the tape and coating may melt when it is being heated by absorbing irradiative energy for the fixation surface to weld to the fibrous material of the liner, the coating of the liner and the stitched area of the liner. Additionally the plastic material may fixate to and fill the holes between the seams and in the coating of the liner created by the needle during stitching. When the fixation surface solidifies by cooling or alternatively solidifies by polymerization, the tape and the fixation surface will be fixated to the liner.

It is contemplated that the fibrous liner and the thread used for the stitching should be of a material having a higher melting point than the melting point of the tape for allowing the liner and thread to remain solid during irradiation and welding of the tape. It is further contemplated that the curing temperature of the resin should be lower than the melting temperature of the tape, for avoiding delamination of the tape during curing of the liner. The fixation should be permanent, i.e. the tape should not be removable without great effort. Typically, the tape will remain fixated to the liner during the useful lifetime of the liner. In some embodiments, the tape may additionally be pressed onto the seam area of the liner by a roller or the like for achieving an improved fixation. The tape is irradiated by a preferably stationary electromagnetic radiation source before the liner is being impregnated.

After the fixation surface and the adjacent liner coating surface has solidified, i.e. after being subjected to electromagnetic radiation of the first wavelength or wavelength range, the fixation surface and the tape should be at least substantially transparent to electromagnetic radiation of the second wavelength or wavelength range for allowing curing of the seam area or the liner located below the tape when subjecting the liner to electromagnetic radiation of the second wavelength or wavelength range. In some embodiments the fixation surface and/or the tape at the fixation surface may include radiation-absorbing materials, such as granulates, particles or pigments of a substance being substantially absorbing for the first wavelength or wavelength range and substantially transparent for the second wavelength or wavelength range. It is further contemplated that the fixation surface and the tape may be non-transparent for electromagnetic radiation of the second wavelength or wavelength range before being subjected to electromagnetic radiation of the first wavelength or wavelength range, i.e. the fixation surface may include particles or pigments which are initially absorbing for both the first and second wavelengths or wavelength ranges and which when subjected to electromagnetic radiation of the first wavelength or wavelength range become transparent to electromagnetic radiation of the second wavelength or wavelength range, e.g. by degrading, combusting or changing the molecular structure of the absorbing material. The thickness of the tape is typically around 0.5-1 mm and the thickness at the fixation surface where absorption is large, i.e. the density of absorbing material is high, is typically about 0.05-0.2mm.

The pipeline is particularly suitable for sewage pipelines, however, the method is also applicable to other pipelines such as water pipelines and gas pipelines. The flat web structure is folded into a tubular shape and the opposing edges are stitched together. Typically, the opposing edges are positioned adjacent each other since an overlap of the opposing edges is undesired as it would lead to a bulge in the liner, which would reduce the flow area of the renovated pipeline. The stitching is made using thread and needle and preferably by a high-speed industrial sewing machine. It is contemplated that the size of the sewing machine depends on the size of the liner.

The tape should be applied and fixated after the liner has been stitched but before impregnating the liner with resin. When impregnating, typically the inner surface of the liner is soaked in resin. The resin cannot penetrate to the outside of the liner due to the coating of the liner and the tape. By bridging is in the present context understood covering the complete stitched area, i.e. the portion of the liner located at the opposing edges having holes resulting from the stitching for achieving a fluid-proof sealing of the liner.

A further feature of the method according to the first aspect further comprises the introductory steps of depositing a radiation-absorbing material exhibiting absorbance of electromagnetic radiation of the first wavelength or the first wavelength range in the tape at the fixation surface. The fixation surface may be accomplished by depositing absorbing material, i.e. a material having high absorbance for electromagnetic radiation of the first wavelength or wavelength range and high transparency for electromagnetic radiation of the second wavelength or wavelength range. The absorbing material may be of different compositions, such as pigments, particles or granulates, which are introduced into the tape. It is contemplated that any distribution of absorbing material may be achieved, and concentration of the pigment particles near the fixation surface will allow the fixation surface of the tape to melt, solidify and weld to the stitched area of the liner, while the opposite outwardly oriented surface remains solid. A solid outward surface is required for the ability of applying a fixation force by the use of a roller onto the tape without any risk of adhesion towards the roller.

According to a further feature of the method according to the first aspect, the radiation-absorbing substance is deposited into the fixation surface of the tape by co-extruding the tape and the radiation-absorbing substance, or alternatively by providing two oppositely located rollers and pressing the radiation-absorbing substance into the fixation surface of the tape, or further alternatively by sputtering the radiation-absorbing substance into the fixation surface of the tape. Typically, the strip of substantially transparent polymeric material being the base material for the tape, is extruded from a uniform plastic material. Thereby a continuous tape of uniform thickness may be achieved. In some embodiments the co-extrusion technique may be used. Thereby two different extruders, one being filled with polymeric material and the other being filled with absorbing material, cause polymeric materials and absorbing material to be extruded through a single extrusion head, or die. It is contemplated that an absorbing plastic material being absorbing at the first wavelength or wavelength range may be coextruded together with a substantially transparent material for achieving a tape having an fixation surface at the absorbing material and an opposite outwardly non-fixation surface at the substantially transparent material. Alternatively, the strip or polymeric material may be extruded separately, and the absorbing material may be pressed into the strip by causing the strip to enter between two oppositely located rollers, thereby achieving a tape having a fixation surface where the absorbing material was pressed into the polymeric material. The polymeric material may have to be softened prior to pressing, e.g. by subjecting it to a heat source, for allowing the absorbing material to enter and be encapsulated by the polymeric material. Alternatively, by using the sputtering technique the surface of the polymeric strip may be bombarded with particles of absorbing material, thereby achieving a large concentration of particles remaining near the fixation surface and less concentration of pigment particles penetrating deep inside the tape.

According to a further feature of the method according to the first aspect, the first polymeric material is identical to the second polymeric material. By using identical polymeric materials for the coating of the liner and for the tape, it can be ensured that the materials are compatible. The identical materials will typically merge to form a perfect weld where the welding zone exhibits the same material strength as the rest of the material.

According to a further feature of the method according to the first aspect, the first and second polymeric materials are chosen from PE, PP, PU, or combination thereof. The tape should be made of a flexible and fluid-impermeable polymeric. Preferably a plastic material such as PE (polyethylene), PP (polypropylene) or PU (polyurethane) is used as base material of the tape, and the base material itself is preferably transparent to electromagnetic radiation of all relevant wavelengths, which in the present context are in the visible spectrum and nearby wavelengths, i.e. UV and IR radiation.

According to a further feature of the method according to the first aspect, the fixation surface is substantially non-adhesive prior to the phase transitions of the fixation surface. Initially, the fixation surface may be essentially non-adhesive and may not interact with the coating of the liner until the electromagnetic radiation of the first wavelength or wavelength range is applied for the adhesive surface to melt. Thereby the handling of the tape is simplified and there is no need for introducing any adhesive material at the fixation surface. Such adhesive materials may adversely affect the quality of the weld.

According to a further feature of the method according to the first aspect, the electromagnetic irradiation source comprises a LED source. By using a LED (Light Emitting Diode) a cheap and reliable source of energy is provided. LEDs have a high efficiency and provide electromagnetic radiation of a single wavelength. The wavelength of the emitted electromagnetic radiation of the LED source is preferably chosen to be near the absorption peak of the resin as well as within the substantially non-absorbing spectrum of the fixation surface. Alternatively, a laser source may be used. The fixation surface is preferably treated with a laser source having its wavelength near the absorption peak of the fixation surface.

According to a further feature of the method according to the first aspect, the tape is substantially transparent to electromagnetic radiation of a wavelength below 700nm, preferably about 400-700nm, and in particular 450nm. For allowing curing of the resin-impregnated liner in the stitched area using UV or visible electromagnetic radiation, the tape should be substantially transparent for UV or visible wavelengths, i.e. below 700nm. This will allow UV and visible wavelengths to penetrate the tape and the fixation surface without any substantial energy loss and the irradiative energy will be used to cure the resin. It is contemplated that some irradiative losses within the tape and fixation surface are unavoidable, and a tape being transparent to visible electromagnetic radiation enables a visual inspection of the stitched area.

According to a further feature of the method according to the first aspect, the second wavelength or wavelength range is below 700nm, preferably within 250-700nm, more preferably 250-500nm, most preferably 450nm, or alternatively 350-450nm or alternatively 450-500nm. In the last decade, liners have been impregnated with a UV-curable resin, which has proven to be disadvantageous, see e.g. WO 2008/101499. Newly, a resin, which is curable by visible light, such as blue light, may be used. The second wavelength should preferably be different from the first wavelength for allowing substantially all irradiated energy of the second wavelength to be transmitted through the tape and adhesive layer and be absorbed in the resin for curing the resin.

According to a further feature of the method according to the first aspect, the first wavelength or wavelength range is within 500-2000nm, preferably 750-1500nm, more preferably 900-1200nm, most preferably 1050nm, or alternatively 900-1050nm, or alternatively 1050-1200nm. By using a tape having a fixation surface which is absorbing in the above wavelengths of electromagnetic radiation, the fixation surface may be cured by the provision of IR irradiation while being substantially transparent for IR and visible electromagnetic radiation. Typical IR radiation sources are halogen lamps. The fixation surface may have pigment particles being absorbing for IR radiation. One such product, which is currently on the market, is Lumogen IR 1050^{™}, commercially available from the company BASF, which has an absorption peak near 1050nm. (It is contemplated that other manufacturers may produce similar products, which may be used for the present purpose as well.) The absorption spectrum of Lumogen IR 1050^{™} resembles the output spectrum of a halogen lamp, which may preferably be used for melting and fixating the tape.

According to a further feature of the method according to the first aspect, the tape and the fixation surface, at least after being irradiated by electromagnetic radiation of the first wavelength or wavelength range, exhibit transmittance of at least 60%, preferably 70%, more preferably 80% and most preferably 90%, of incoming electromagnetic radiation of the second wavelength or wavelength range. A high transmittance of electromagnetic radiation of the second wavelength or wavelength range will allow the tape to remain cool during the curing of the liner. It is contemplated that some heating of the tape in unavoidable during the curing phase, however, it should be avoided to allow the tape to reach the melting temperature of the tape, since delimitation of the tape may occur. By transmitting most of the incoming electromagnetic radiation of the second wavelength or wavelength range during curing will allow the tape to remain cool and solid. The requirement of transmittance is required after the tape has been fixated, so that the tape may be opaque before being irradiated by the first wavelength or wavelength range and by degradation of the absorbing material during irradiation turn transparent after cooling.

According to a further feature of the method according to the first aspect, the tape at the fixation surface, at least before being irradiated by electromagnetic radiation of the first wavelength or wavelength range, exhibits absorbance of at least 60%, preferably 70%, more preferably 80% and most preferably 90%, of incoming electromagnetic radiation of the first wavelength or wavelength range. For allowing an efficient heating and melting of the polymeric material, without exhibiting the web material and the coating being non-adjacent to the fixation surface, the tape should preferably absorb a high percentage of the incoming electromagnetic radiation of the first wavelength or wavelength range.

The liner assembly according to the present invention will now be further described with reference to the drawing, in which:
Fig 1 shows a liner assembly,
Figs 2A-C is a series showing the installation of a liner by eversion,
Figs 3A-C show embodiments of the tape manufacturing, and
Figs 4A-B show absorption characteristics of the tape, absorbing material and liner.

A detailed description of the figures follows below:

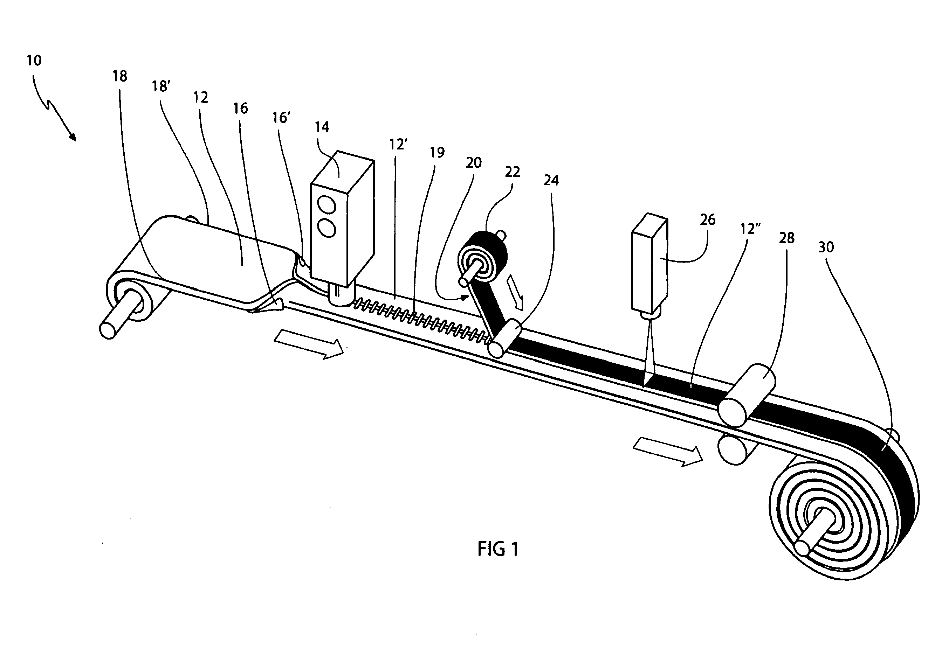

Fig 1 shows a liner assembly 10. A flat web assembly 12 comprising a web of fibrous material being single-sidedly coated by a film of PE (polyethylene) is being provided on a web supply roll from which the flat web assembly 12 is being continuously unrolled and conveyed towards a folding guide 16, 16'. The conveying direction of the web assembly 12 is indicated by the two large arrows. The guide 16 folds the opposing edges 18, 18' of the web assembly 12 towards each other so that the opposing edges 18, 18' are positioned adjacent each other forming a tubular liner 12' having the polymeric coating oriented outwardly. The liner 12' is subsequently conveyed to a sewing machine 14, which stitches the two opposing edges 18, 18' of the liner 12' together to form a seam or stitched area 19. After being stitched the whole stitched area 19 is being covered by a tape 22 of PE material. The tape 22 is being continuously provided from a tape supply roll 22 and brought into contact with the stitched area 19 by a guide roller 24. The tape 22 has a fixation surface 20 which is oriented towards the stitched area 19 of the liner 12'. The tape is absorbing to IR radiation and non-absorbing, i.e. transparent, to UV radiation and visible radiation at the fixation surface 20. The conveying direction of the tape 22 is indicated by the small arrow. Following the guide roller 24 is an IR radiation source 26, which is directing IR radiation towards the tape 22. The IR radiation is absorbed in the tape 22 at the fixation surface 20 for heating and causing the tape 22 to melt or liquefy at the fixation surface 20, while remaining solid and substantially cool at its opposite upwardly oriented surface. The heated fixation surface 20 will cause the contacting polymeric coating of the liner 12' to partially melt due to thermal conduction, and the PE of the tape 22 and of the coating of the liner 12" will merge, welding the coating and the tape 22 together. When the fixation surface 20 of the tape 22 melts while passing through the irradiated area of the IR radiation source 26, the tape 22 will fixate to the seam area 19 of the liner 12". The upper surface of the tape 22, i.e. opposite the fixation surface 20, will remain in solid state during the complete heating process. After passing the IR radiation source 26 and while still having the tape 22 and the coating in a partially melted state, the liner 12" passes between two oppositely located pressure rollers 28. The pressure rollers 28 are applying a pressure force onto the liner 12' and the tape 22 to eliminate any air pockets possibly remaining between the tape 22 and the coating of the liner 12' to permanently fixate the tape 22 to the coating at the seam area 19 of the liner 12'. Since the upper surface of the tape 22, i.e. opposite the fixation surface 20, remains in solid state, the tape does not weld or smear onto the pressure rollers 28. The pressure rollers 28 additionally are used to feed the liner 12' through the liner assembly 10. Additionally, the pressure rollers 28 may be used to cool the tape 22 to ambient temperature, or a further pair of rollers (not shown) may be used for this purpose. The tape remains transparent to UV and visible radiation, and the stitched area 19 may thus be visually inspected after the tape 22 has been fixated to the liner 12'. Finally, the liner 12' is rolled onto a liner roll 30 before being transported to an impregnation plant (not shown). Alternatively, the liner 12' may be folded and subsequently transported to the impregnation plant (not shown), or yet alternatively the impregnation plant (not shown) may follow immediately after the pressure rollers 28, thereby omitting the liner roll 30.

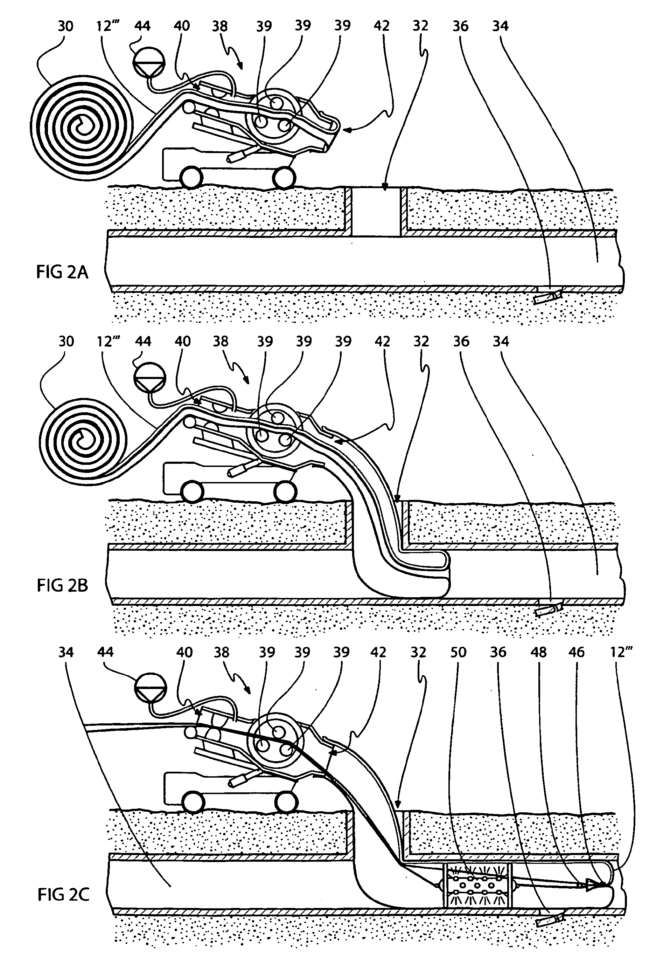

Figs 2A-C show the method of renovating a pipeline, typically an underground sewage pipeline or the like, by using the eversion technology. In the present context the word eversion is used synonymous with the word inversion to describe the renovation technology.
Fig 2A shows a manhole 32 of an underground sewage pipeline 34 having a void 36 and a lining device 38 located on the ground nearby. The lining device 38 has been developed and produced by the applicant company under the name "Air robot". The void 36 in the pipeline 34 about to be renovated results in contaminated sewage water escaping from the pipeline 34 without treatment, which may be hazardous to the environment and the health of humans and animals. The pipeline 34 must therefore be renovated as soon as possible for minimizing the impact on health and environment. For this purpose the eversion technology is used.

For performing the eversion technology, a coated and resin impregnated liner 12'" of suitable length and width corresponding to the section of the pipeline 34 to be renovated is provided in a flat shape in the form of a roll 30. The liner 12" is impregnated by a UV curable resin and sealed by a tape 22 as previously described in connection with Fig 1. The liner 12"' is provided in the form of a roll 30 defining an open proximal end. The lining device 38 defines a rear opening 40 and a front opening 42. The first step of the eversion technology involves introducing the proximal end 44 of the liner 12'" through the rear opening 40 of the lining device 38, via a roller assembly 39 and arresting the proximal end of the liner 12"' at the front opening of the lining device. The rear opening 40 fits substantially fluid-tight to the flattened liner 12"'. The lining device is typically positioned near the manhole 32, however, it may also be positioned near another inlet or outlet of the pipeline 34. A pneumatic device 44 is connected to the lining device 38 for providing compressed air to the lining device 38. Typically, a rubber lip, preferably being pressurized, is used for preventing pressurized gas to escape through the rear opening 40.

Fig 2B shows the lining device 38 during eversion (inversion) of the liner 12"' into the pipeline 34. The liner 12"' is driven into the manhole 32 and pipeline 34 by the roller assembly 39. The roller assembly 39 holds the liner 12"' and controls the progression of the liner 12"' into the pipeline 34. The roller assembly 39 also allows the liner 12'" to occasionally reverse direction in the event of the liner 12" getting temporarily stuck inside the pipeline 34, e.g. when trying to overcome a curve or bend inside the pipeline 34. By applying pressurized air to the interior of the lining device, the elevated pressure will cause the liner 12"' to bulge outwardly in a tubular shape at the front opening while being inverted. The liner 12'" is being led into the manhole 32 and will assume a tubular shape and a substantially circular cross section, i.e. contacting the walls of the pipeline 34, due to the elevated pressure. The distant end of the liner 12"' being opposite the proximal end of the liner 12'" which is arrested to the front opening 42 of the lining device 38, is closed for allowing the complete liner 12"' to enter the pipeline 34, which will be further described below.

Fig 2C shows the lining device 38 when the liner 12'" has been inverted into the pipeline 34. The distant end of the liner 12'" is closed by a knot 46, which is being connected to a block and tackle 48. The block and tackle 48 comprises a pulley connected to the knot 46 and a long rope connected to the pulley. The rope of the block and tackle 48 allows continuous control of the inversion process until the distant end of the liner reaches its final position inside the pipeline 34. An electromagnetic radiation source 50 is connected to the rope of the block and tackle 48. The electromagnetic radiation source 50 comprises blue diodes emitting visible light having a wavelength of about 450nm. In the present context it is contemplated that the liner is being impregnated with a blue light-curable resin and reference is made to the previously mentioned patent publications WO2005/103121 and WO2008/101499 for the resin and the radiation source 50, respectively. (Resins curable by blue light are preferred over UV curable resins due to the harmful health effects resulting from the exposure to UV radiation.) While still applying pressurized air via the pneumatic device 44 for retaining the tubular shape of the liner 12"', the radiation source 50 is introduced into the lined pipeline 34 by using the block and tackle 48. When the resin is exhibited to blue light from the passing radiation source 50, the resin will cure and the liner 12' will be solidified in its tubular shape and substantially circular cross section.

Subsequently the radiation source 50 is allowed to be pulled out again, the pneumatic device 44 to be turned off and the lining device 38 to be removed.

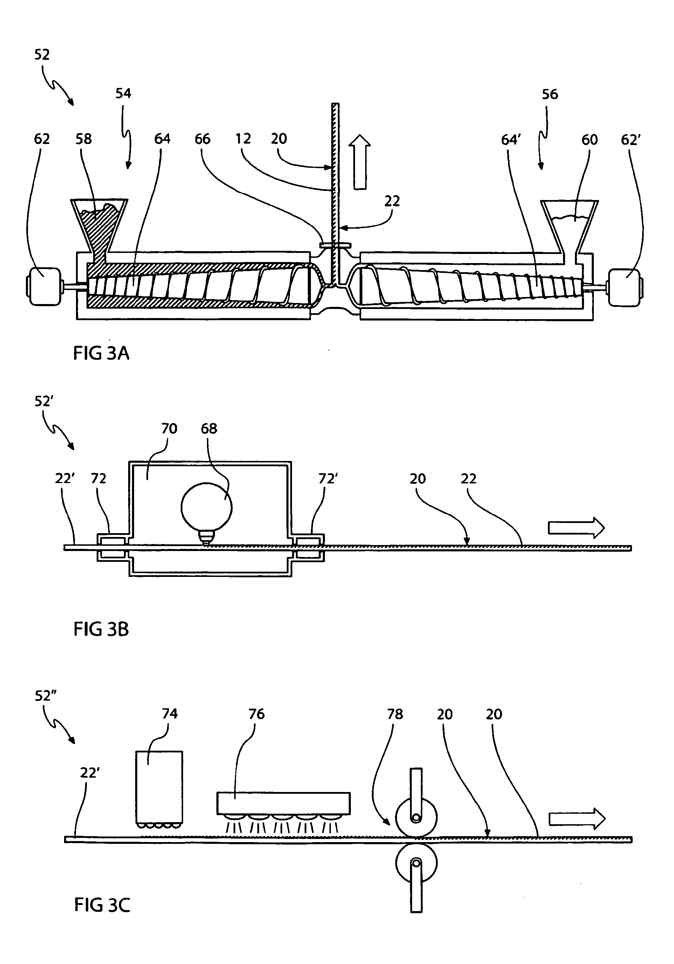

Figs 3A-C show some preferred embodiments of a tape production plant. The conveying direction of the tape is indicated in the figures by an arrow.

Fig 3A shows a tape production plant 52 for producing the above mentioned tape 12 by utilizing the co-extrusion technique. The tape production plant 52 comprises a 1^{st} extruder 54 and a 2^{nd} extruder 56 oriented opposite the 1^{st} extruder 54. The 1^{st} extruder 54 is filled with a radiation-absorbing material 58, preferably the previously mentioned Lumogen™ 1050. The 2^{nd} extruder 56 is filled with polymeric material 60, preferably being PE (polyethylene). Each of the 1^{st} and 2^{nd} extruders 54, 56 comprises a motor 62, 62' and a screw 64, 64' which is driven by the motor 62, 62'. The screw 64 drives the respective radiation-absorbing material 58 and the polymeric material 60 towards a common die 66 to form the continuous tape 22 of polymeric material 60 having a fixation surface 20 with a high density of radiation-absorbing material 58 and an opposite surface with a low density of radiation-absorbing material 58. The radiation-absorbing material 58 will thereby be distributed inside the tape 22 and on the fixation surface 20, however, the greatest portion of the radiation-absorbing material 58 will be stored or deposited inside the tape 22 near the fixation surface 20.

Fig 3B shows a tape production plant 52' according to a further embodiment comprising a cabinet 70. The cabinet 70 is gas-tight and defines an inner vacuum space. A tape 22' of extruded polymeric material 60 is introduced into the cabinet 70 via a vacuum lock 72. A sputtering device 68 is located inside the cabinet 70. The sputtering device 68 is used for subjecting the upper surface of the tape 22' to a bombardment of particles of radiation-absorbing material 58. The radiation-absorbing material 58 will impact on the upper surface of the tape 22' having a high velocity and deposit inside the tape 22' at the upper surface 20, which will then constitute the fixation surface 20. The tape 22 constituting the tape 22' having deposited radiation-absorbing material 58 subsequently leaves the cabinet 70 via a further vacuum lock 70' and may be collected in e.g. a roll or the like.

Fig 3C shows a tape production plant 52" according to a further embodiment comprising an applicator 74, a heater 76 and a pair of opposing pressure rollers 78. An extruded tape 22' of polymeric material is introduced into the tape production plant 52" and radiation-absorbing material 58 is applied onto the upper surface of the tape 22' by the applicator 74. Subsequently the tape 72 is softened by the heater 76 and caused to enter between the opposing rollers 78 applying a pressure to the tape 22' for the radiation-absorbing material 58 to deposit inside the tape 22' near the upper surface, thereby forming the tape 22 having the fixation surface 20, respectively.

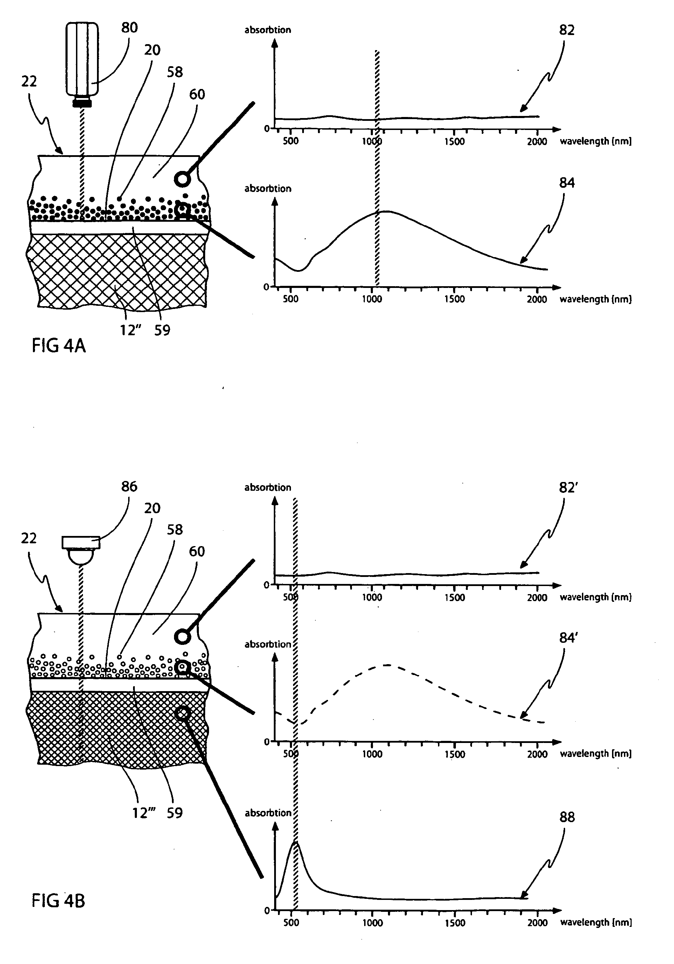

It is contemplated that in the tape 22 manufactured by any of the tape production plants 52 of Figs 3A-C the radiation-absorbing material 58 will be distributed inside the tape 22 with a high ratio of the radiation-absorbing material 58 being deposited near the fixation surface 20' and a very low ratio of radiation-absorbing material near the surface of the tape 22 being opposite the fixation surface 20'. It is further contemplated that the fixation surface 20' may have weak or no adhesive properties before being subjected to electromagnetic radiation, as will be further described in connection with Fig 4. The tape 22 is characterized as a strip being an integral continuous structure of a polymeric material having integrated radiation-absorbing material 58. The thickness of the tape 22 is about 0.5-1 mm. The thickness where the density of radiation-absorbing material is high enough for the absorbed heat to cause melting of the tape at the fixation surface 20' is about 0.05-0.2mm for allowing the opposite surface of the tape 22 to remain solid during exposure to electromagnetic radiation.

Fig 4A shows a cutout view of the tape 22 when applied on the liner 12" before the liner 12" has been impregnated with resin. The tape 22 has a fixation surface 20 in contact with the liner 12" at the location of a seam, stitched area or similar non-fluid-tight void. The tape 22 is made of polymeric material 60 and has radiation-absorbing material 58 near the fixation surface 20'. The liner 12' has a polymeric coating 59 of about 0.4-1 mm at the fixation surface 20, the polymeric coating 59 and the polymeric material 60 being compatible. The liner 12" and the tape 22 are conveyed past an IR-radiation source 80 emitting electromagnetic radiation of a wavelength being absorbed by the radiation-absorbing material 58. In the present example Lumogen 1050 of the company BASF AG is used as radiation-absorbing material 58 and the IR-radiation source 80 is emitting electromagnetic radiation of 1050nm towards the tape 22. The IR-radiation source 80 may e.g. be a halogen lamp. The upper chart 82 shows the absorption characteristic of the polymeric material 60 of the tape 22. The polymeric material 60 is substantially non-absorbing, i.e. transparent (except for transmission losses within the material) to electromagnetic radiation of all wavelengths, i.e. UV, IR and visible radiation and will thus not be significantly heated. The lower chart 84 shows the absorption characteristic of the radiation-absorbing material 58. The radiation-absorbing material is absorbing to electromagnetic radiation of the IR wavelength, in particular around 1050nm, and substantially non-absorbing, i.e. transparent, to electromagnetic radiation of UV and visual wavelength.

When the tape 22 is subjected to IR radiation, the radiation-absorbing material 58' will heat and melt the polymeric material 60 of the tape 22 and the coating 59 of the liner 12" at the fixation surface 20, causing the tape 22 and the coating 59 of the liner 12" to weld and merge at the fixation surface 20. When the tape 22 has been cooled down to room temperature, the liner 12" is welded and sealed fluid-tight.

Fig 4B shows a cutout view of the tape 22 when welded to the liner 12"' after the liner has been impregnated with resin. The resin should be curable when exhibited to visible blue light. (Although UV curable resin is equally feasible and may be preferable in some embodiments the presently preferred embodiment uses visual blue light-curable resin due to the above mentioned health concerns.) The tape 22 has the fixation surface 20 fluid-tightly fixated (welded) to the liner 12"'. When the liner 12"' has been inverted into the pipeline, as shown in figs 2a-c, a blue radiation source 86 emitting electromagnetic radiation of visible blue light of 440-490nm towards the liner 12'" and the tape 22 is passed through the pipeline. The visible blue light is being absorbed by the resin inside the liner 12"'. In one particular embodiment blue light of 450nm wavelength is emitted towards the liner 12"' and the tape 22. Resin curable by such blue light is being provided by e.g. the company DSM and is described in WO2005/103121. The upper chart 82' shows the absorption characteristic of the polymeric material 54 of the tape 22. The polymeric material 60 is, as shown above, substantially non-absorbing, i.e. transparent, to electromagnetic radiation of all wavelengths, i.e. UV, IR and visible radiation. The middle chart 84' shows the absorption characteristic of the radiation-absorbing material 58. The radiation-absorbing material should be non-absorbing, i.e. transparent, for electromagnetic radiation of visual wavelength, in particular blue light, and possibly UV. The line has been dashed to indicate that the radiation-absorbing material may be absorbing to electromagnetic radiation of the IR wavelength, or possibly the radiation-absorbing material 58 may be degraded or burned off after the prior exposure to IR radiation, rendering the radiation-absorbing material 58 transparent or even reflective for IR radiation.

The lower chart 88 shows the absorption characteristics for the resin-impregnated liner 88, having an absorption peak for blue light at 550nm. When the tape 22 and the resin-impregnated liner 12"' is exhibited to electromagnetic radiation of (UV or) visible wavelength, the tape 22 will transmit the incoming (UV or) visible radiation to the liner 12"', thereby curing the liner 12"'.

In the present context IR is understood to be electromagnetic radiation having a wavelength of 700-2000nm, visible radiation having a wavelength of 400-700nm and UV radiation having a wavelength <400nm.

It is further contemplated that the above specified absorption and non-absorption/transparent wavelengths are exemplary embodiments. However, by providing different resins and radiation-absorbing materials, e.g. UV may be used to fixate the tape to the liner and e.g. IR may be used for curing the liner when installed. Thus, any combination of wavelengths within the UV, visible and IR spectrum may be used for melting the tape and the coating 59 and curing the resin, provided the tape is substantially transparent to the wavelength of electromagnetic radiation used for curing the liner. Substantially transparent should here be understood as transmitting most part of the radiation for allowing a sufficient curing of the liner.

The above mentioned tape is preferably used in connection with the above described sealing of the stitched area of the liner. However, it is contemplated that the tape may be used for numerous other applications, such as when repairing damaged liners having accidental non-fluid-tight voids, or for repairing voids resulting from the impregnation, etc.

In the present context the word "fluid-tight" should be construed to mean pressure-tight for fluid pressures of at least about 2 bar.

The curing temperature of the presently preferred resin is about 110°C, which is significantly lower than the melting temperature of PP, which is about 140°C.

### List of parts with reference to the figures:

| | |
|---|---|
| 10. Liner assembly | 50. Radiation source |
| 12. Web/Liner | 52. Tape production plant |
| 14. Sewing machine | 54. 1^{st} extruder |
| 16. Guide | 56.2^{nd} extruder |
| 18. Edge | 58. Radiation-absorbing material |
| 19. Stitched area | 59. Coating |
| 20. Fixation surface | 60. Polymeric material |
| 22. Tape | 62. Motor |
| 24. Guide roller | 64. Screw |
| 26. IR radiation source | 66. Die |
| 28. Pressure roller | 68. Sputtering device |
| 30. Liner roll | 70. Cabinet |
| 32. Pipeline | 72. Vacuum lock |
| 34. Manhole | 74. Applicator |
| 36. Void | 76. Heater |
| 38. Lining device | 78. Rollers |
| 39. Roller assembly | 80. IR radiation source |
| 40. Rear opening | 82. Absorption chart of polymeric mat. |
| 42. Front opening | 84. Absorption chart of absorbing mat. |
| 44. Pneumatic device | 86. Blue light radiation source |
| 46. Knot | 88. Absorption chart of resin |
| 48. Block & tackle | |

One or more marks (') indicate further features of the same part.

## Claims

1. A method of renovating a pipeline (34) having a pipeline (34) inner surface, comprising the following steps:
providing a continuous web assembly (12) including a web of fibrous material and a fluid impermeable surface coating (59) or foil of a first polymeric material, said web assembly (12) being flat and defining a first surface defined by said web and an opposite second surface defined by said coating (59) or foil, said web assembly (12) defining a first edge (18) and an opposite second edge (18'),
folding said web assembly (12) by positioning said first and second edges (18, 18') adjacent each other to form a tubular liner (12'), said first surface constituting the inner surface of said tubular liner (12') and said second surface constituting the outer surface of said tubular liner (12'),
joining and stitching said first and second edges (18, 18') together, thereby establishing a continuous stitched area (18") bridging said first and second edges (18, 18'),
providing a flexible and fluid impermeable tape (22) of a second polymeric material compatible with said first polymeric material and having a fixation surface (20) being capable of a first phase transition from solid to liquid state by irradiation of electromagnetic radiation of a first wavelength or a first wavelength range and being capable of a second phase transition from liquid to solid state when allowed to cool, said tape (22) being at least transparent to electromagnetic radiation of said first wavelength or said first wavelength range, said tape (22) and said fixation surface (20) after said second phase transition being at least transparent to electromagnetic radiation of a second wavelength or wavelength range,
applying said tape (22) to said second surface, said fixation surface (20) facing said second surface and covering said continuous stitched area (18"),
irradiating said tape (22) with electromagnetic radiation of said first wavelength or said first wavelength range for causing said first phase transition and permanently fixing said tape (22) to said coating (59) or foil by causing said second phase transition,
impregnating said liner (12') by a resin, said resin being curable by irradiation of electromagnetic radiation of said second wavelength or wavelength range,
inverting said liner (12') into said pipeline (34) by contacting said first surface constituting the outer surface of said liner (12') after the inversion to said pipeline (34) inner surface, and
irradiating said second surface of said liner (12') constituting the inner surface of said liner (12') after the inversion with electromagnetic radiation of said second wavelength or said second wavelength range.

2. The method according to claim 1, further comprising the introductory steps of depositing a radiation-absorbing material exhibiting absorbance of electromagnetic radiation of said first wavelength or said first wavelength range in said tape (22) at said fixation surface (20).

3. The method according to claim 2, wherein said radiation-absorbing substance is deposited into said fixation surface (20) of said tape (22) by co-extruding said tape (22) and said radiation-absorbing substance, or alternatively by providing two oppositely located rollers and pressing said radiation-absorbing substance into said fixation surface (20) of said tape (22), or further alternatively by sputtering said radiation-absorbing substance into said fixation surface (20) of said tape (22).

4. The method according to any of the preceding claims, wherein said first polymeric material is identical to said second polymeric material.

5. The method according to any of the preceding claims, wherein said first and second polymeric materials are chosen from PE, PP, PU, or combination thereof.

6. The method according to any of the preceding claims, wherein said tape (22) and/or said second surface of said liner (12') is being irradiated by an electromagnetic irradiation source comprising an LED or alternatively a laser.

7. The method according to any of the preceding claims, wherein said tape (22) and said fixation surface (20) is substantially transparent to electromagnetic radiation of a wavelength below 700nm, preferably about 400-700nm, and in particular 450nm.

8. The method according to any of the preceding claims, wherein said second wavelength or wavelength range is below 700nm, preferably within 250-700nm, more preferably 250-500nm, most preferably 450nm, or alternatively 350-450nm or alternatively 450-500nm.

9. The method according to any of the preceding claims, wherein said first wavelength or wavelength range is within 500-2000nm, preferably 750-1500nm, more preferably 900-1200nm, most preferably 1050nm, or alternatively 900-1050nm, or alternatively 1050-1200nm.

10. The method according to any of the preceding claims, wherein said fixation surface (20) is substantially non-adhesive prior to said phase transitions of said fixation surface (20).

11. The method according to any of the preceding claims, wherein said tape (22) and said fixation surface (20), at least after being irradiated by electromagnetic radiation of said first wavelength or wavelength range, exhibit transmittance of at least 60%, preferably 70%, more preferably 80% and most preferably 90%, of incoming electromagnetic radiation of said second wavelength or wavelength range.

12. The method according to any of the preceding claims, wherein said tape (22) at said fixation surface (20), at least before being irradiated by electromagnetic radiation of said first wavelength or wavelength range, exhibits absorbance of at least 60%, preferably 70%, more preferably 80% and most preferably 90%, of incoming electromagnetic radiation of said first wavelength or wavelength range.

## Patentansprüche

1. Verfahren zum Erneuern der Rohrinnenfläche einer Rohrleitung (34), welches folgendes umfasst:
Bereitstellung einer fortlaufenden Bahnanordnung (12), welche eine Bahn aus Fibermaterial und einen für Flüssigkeit undurchlässigen Oberflächenbelag (59) oder eine Folie aus einem ersten Polymermaterial umfasst, welche Bahnanordnung (12) flach ist und eine erste, von der besagten Bahn definierte Oberfläche definiert, und eine gegenüberliegende, von dem besagten Belag (59) oder der besagten Folie definierte zweite Oberfläche definiert, indem die Bahnanordnung (12) eine erste Kante (18) und eine gegenüberliegende zweite Kante (18') definiert,
Faltung der besagten Bahnanordnung (12) durch Platzierung der besagten ersten und zweiten Kanten (18, 18') nebeneinander zur Bildung einer rohrförmigen Auskleidung (12'), wobei die besagte erste Oberfläche die Innenfläche der besagten rohrförmigen Auskleidung (12') bildet und die besagte zweite Oberfläche die Aussenfläche der besagten rohrförmigen Auskleidung (12') bildet,
Verbindung und Zusammenheftung der besagten ersten und zweiten Kanten (18, 18') zur Erstellung eines fortlaufenden gehefteten Bereichs (18"), welcher die besagte erste und zweite Kante (18, 18') überbrückt,
Bereitstellung eines flexiblen und für Flussigkeit undurchlässigen Bands (22) aus einem mit dem besagten ersten Polymermaterial kompatiblen zweiten Polymermaterial und mit einer Befestigungsfläche (20), welches Band im Stande ist, durch Bestrahlung mit elektromagnetischen Strahlen einer ersten Wellenlänge oder eines ersten Wellenlängenbereichs einen ersten Phasenübergang von einem festen in einen flüssige Zustand und einen durch Abkühlung auftretenden zweiten Phasenübergang von einem flüssigen in einen festen Zustand zu durchlaufen, indem das besagte Band (22) zumindest für elektromagnetische Strahlung der besagten ersten Wellenlänge oder des besagten ersten Wellenlängenbereichs durchlässig ist und das besagte Band (22) und die besagte Befestigungsfläche (20) nach dem besagten zweiten Phasenübergang zumindest für elektromagnetische Strahlung einer zweiten Wellenlänge oder eines zweiten Wellenlängenbereichs durchlässig ist,
Anbringung des besagten Bands (22) an der besagten zweiten Oberfläche, wobei die besagte Befestigungsfläche (20) der besagten zweiten Oberfläche zugewendet ist und den besagten fortlaufenden gehefteten Bereich (18") deckt,
Bestrahlung des besagten Bands (22) mit elektromagnetischer Strahlung der besagten ersten Wellenlänge oder des besagten ersten Wellenlängenbereichs zur Auslösung des besagten ersten Phasenübergang und zur dauerhaften Befestigung des besagten Bands (22) an dem besagten Belag (59) oder der besagten Folie durch Auslösung des besagten zweiten Phasenübergangs,
Imprægnierung der besagten Auskleidung (12') mit einem Harz, welches Harz gehärtet werden kann durch Bestrahlung mit elektromagnetischer Strahlung der besagten zweiten Wellenlänge oder des besagten zweiten Wellenlängenbereichs,
Umstülpung der besagten Auskleidung (12') in die besagte Rohrleitung (34) hinein, indem die besagte erste Oberfläche, die nach der Umstulpung die Aussenfläche der besagten Auskleidung (12') bildet, in Kontakt mit der Innenfläche der besagten Rohrleitung (34) gebracht wird, und
Bestrahlung der besagten zweiten Oberfläche der besagten Auskleidung (12'), die nach der Umstülpung die Innenfläche der besagten Auskleidung (12') bildet, mit elektromagnetischer Strahlung der besagten zweiten Wellenlänge oder des besagten zweiten Wellenlängenbereichs

2. Verfahren gemäss Anspruch 1, welches ferner die einleitenden Stufen der Ablagerung eines strahlungsabsorbierenden Materials umfasst, welches ein Absorptionsvermögen für elektromagnetische Strahlung der besagten ersten Wellenlänge oder des besagten ersten Wellenlängenbereichs in dem besagten Band (22) an der besagten Befestigungsfläche (20) aufweist

3. Verfahren gemäss Anspruch 2, worin die besagte strahlungsabsorbierende Substanz in die besagte Befestigungsfläche (20) des besagten Bands (22) abgelagert wird durch Coextrusion des besagten Bands (22) und der besagten strahlungsabsorbierenden Substanz, oder alternativ durch Bereitstellung zweier einander gegenüberliegenden Walzen und Einpressen der besagten strahlungsabsorbierenden Substanz in die besagte Befestigungsfläche (20) des besagten Bands (22), oder ferner alternativ durch Einspritzen der besagten strahlungsabsorbierende Substanz in die besagte Befestigungsfläche (20) des besagten Bands (22).

4. Verfahren gemäss einem jeglichen der vorhergehenden Anspruch, worin das besagte erste Polymermaterial mit dem besagten zweiten Polymermaterial identisch ist

5. Verfahren gemäss einem jeglichen der vorhergehenden Ansprüche, worin das besagte erste und zweite Polymermaterial unter PE, PP, PU oder einer Kombination derselben ausgewählt wird

6. Verfahren gemäss einem jeglichen der vorhergehenden Ansprüche, worin das besagte Band (22) und/oder die besagte zweite Oberfläche der besagten Auskleidung (12') von einer elektromagnetischen Strahlungsquelle, welche eine LED oder alternativ einen Laser umfasst, bestrahlt wird

7. Verfahren gemäss einem jeglichen der vorhergehenden Ansprüche, worin das besagte Band (22) und die besagte Befestigungsfläche (20) im wesentlichen für elektromagnetische Strahlung mit einer Wellenlänge unter 700nm, vorzugsweise etwa 400nm-700nm, und insbesondere 450nm, durchlässig sind

8. Verfahren gemäss einem jeglichen der vorhergehenden Anspruch, worin die besagte zweite Wellenlänge oder das besagte zweite Wellenlängenbereich unter 700nm, vorzugsweise zwischen 250nm-700nm, mehr vorgezogen zwischen 250nm-500nm, meist vorgezogen bei 450nm, oder alternativ zwischen 350nm-450nm oder alternativ zwischen 450nm-500nm liegt

9. Verfahren gemäss einem jeglichen der vorhergehenden Anspruch, worin die besagte erste Wellenlänge oder das besagte erste Wellenlängenbereich zwischen 500nm-2000nm, vorzugsweise zwischen 750nm-1500nm, mehr vorgezogen zwischen 900nm-1200nm, meist vorgezogen bei 1050nm, oder alternativ zwischen 900nm-1050nm, oder alternativ zwischen 1050nm-1200nm liegt.

10. Verfahren gemäss einem jeglichen der vorhergehenden Ansprüche, worin die besagte Befestigungsfläche (20) vor den besagten Phasenübergängen der besagten Befestigungsfläche (20) im wesentlichen nicht adhäsiv ist.

11. Verfahren gemäss einem jeglichen der vorhergehenden Ansprüche, worin das besagte Band (22) an der besagten Befestigungsfläche (20), zumindest nach Bestrahlung mit elektromagnetischer Strahlung der besagten ersten Wellenlänge oder des besagten ersten Wellenlängenbereichs, einen Durchlässigkeitsgrad von mindestens 60%, vorzugsweise 70%, mehr vorgezogen 80% und meist vorgezogen 90% für eingehende elektromagnetischen Strahlung der besagten zweiten Wellenlänge oder des zweiten Wellenlängenbereichs aufweist.

12. Verfahren gemäss einem jeglichen der vorhergehenden Ansprüche, worin das besagte Band (22) an der besagten Befestigungsfläche (20), zumindest vor Bestrahlung mit elektromagnetischer Strahlung der besagten ersten Wellenlänge oder des besagten ersten Wellenlängenbereichs, ein Absorptionsvermögen von mindestens 60%, vorzugsweise 70%, mehr vorgezogen 80% und meist vorgezogen 90% für eingehende elektromagnetische Strahlung der besagten ersten Wellenlänge oder des besagten ersten Wellenlängenbereichs aufweist

## Revendications

1. Procédé de rénovation pour conduite (34) ayant une surface intérieure de conduite (34) comprenant les étapes suivantes:
fournir un ensemble de ruban continu (12) incluant un ruban en matière fibreuse et une couche ou une feuille de surface imperméable au fluide (59) d'une première matière polymérique, ledit ensemble de ruban (12) étant plat et définissant une première surface définie par ledit ruban et une deuxième surface opposée définie par ladite couche (59) ou ladite feuille, ledit ensemble de ruban (12) définissant un premier bord (18) et un deuxième bord opposé (18'),
plier ledit ensemble de ruban (12) en positionnant lesdits premiers et deuxièmes bords (18, 18') adjacent fun à l'autre pour former un revêtement tubulaire (12'), ladite première surface constituant une surface intérieure dudit revêtement tubulaire (12) et ladite deuxième surface constituant la surface extérieure dudit revêtement tubulaire (12'),
joindre et attacher lesdits premier et deuxièmes bord (18, 18') fun à l'autre, et ainsi établir une superficie attachée continue (18') faisant le pont entre lesdits premier et deuxième bords (18, 18'),
fournir une bande flexible et imperméable au fluide (22) d'une deuxième matière polymérique compatible avec ladite première matière polymérique et ayant une surface de fixation (20) étant capable dune première transition de phase d'un état solide à un état liquide par irradiation de radiation électromagnétique d'une première longueur d'onde ou une première plage de longueur d'onde et étant capable d'une deuxième transition de phase d'un état liquide à un état solide lorsqu'elle se refroidit, ladite bande (22) étant au moins transparente à la radiation électromagnétique de ladite première longueur d'onde ou ladite première plage de longueur d'onde, ladite bande (22) et ladite surface de fixation (20) après ladite deuxième transition de phase étant au moins transparentes à la radiation électromagnétique dune deuxième longueur done ou plage de longueur d'onde,
appliquer ladite bande (22) sur la deuxième surface, ladite surface de fixation (20) faisant face à ladite deuxième surface et couvrant ladite superficie attachée continue (18'),
irradier ladite bande (22) avec de la radiation électromagnétique de ladite première longueur d'onde ou ladite première plage de longueur d'onde afin de provoquer ladite première transition de phase et de manière permanente fixer ladite bande (22) à ladite couche (59) ou à ladite feuille en provoquant ladite deuxième transition de phase,
imprégner ledit revêtement (12) par une résine, ladite résine étant durcissable par irradiation de radiation électromagnétique de ladite deuxième longueur d'onde ou plage de longueur d'onde,
invertir ledit revêtement (12') dans ladite conduite (34) en contactant ladite première surface constituant la surface extérieure dudit revêtement (12) après l'inversion à ladite surface intérieure de conduite (34), et
irradier ladite deuxième surface dudit revêtement (12') constituant ladite surface intérieure dudit revêtement (12') après l'inversion avec de la radiation électromagnétique de ladite deuxième longueur donde ou ladite deuxième plage de longueur d'onde.

2. Procédé selon la revendication 1, comprenant en outre les étapes introductives de déposition dune matière d'absorption de radiation présentant une absorbance de radiation électromagnétique de ladite première longueur d'onde ou ladite première plage de longueur d'onde dans ladite bande (22) à ladite surface de fixation (20).

3. Procédé selon la revendication 2, dans lequel ladite substance d'absorption de radiation est déposée dans ladite surface de fixation (20) de ladite bande (22) par extrusion en couches multiples de ladite bande (22) et ladite substance d'absorption de radiation, ou alternativement en fournissant deux rouleaux localisés à l'opposé et en pressant ladite substance d'absorption de radiation dans ladite surface de fixation (20) de ladite bande (22), ou encore alternativement en pulvérisant ladite substance d'absorption de radiation dans ladite surface de fixation (20) de ladite bande (22).

4. Procédé selon l'une quelconque des revendications précédentes, dans lequel ladite première matière polymérique est identique à ladite deuxième matière polymérique.

5. Procédé selon l'une quelconque des revendications précédentes, dans lequel lesdites premières et deuxièmes matières polymériques sont choisies parmi du PE, PP, PU ou une combinaison de ceux-ci.

6. Procédé selon l'une quelconque des revendications précédentes, dans lequel ladite bande (22) et/ou ladite deuxième surface dudit revêtement (12') est/sont irradiée(s) par une source d'irradiation électromagnétique comprenant une DEL ou alternativement un laser.

7. Procédé selon l'une quelconque des revendications précédentes, dans lequel ladite bande (22) et ladite surface de fixation (20) sont substantiellement transparentes à la radiation électromagnétique d'une longueur d'onde inférieure à 700nm, de préférence d'environ 400nm à 700nm et en particulier de 450nm.

8. Procédé selon l'une quelconque des revendications précédentes, dans lequel ladite deuxième longueur d'onde ou plage de longueur d'onde est inférieure à 700nm, de préférence dans les limites de 250nm à 700nm, plus préférablement de 250nm à 500nm, encore plus préférablement de 450nm ou alternativement de 350nm à 450nm ou alternativement de 450nm à 500m.

9. Procédé selon l'une quelconque des revendications précédentes, dans lequel ladite première longueur d'onde ou plage de longueur d'onde se situe dans les limites de 500nm à 2000nm, de préférence de 750nm à 1500nm, plus préférablement de 900nm à 1200nm, encore plus préférablement 1050nm ou alternativement de 900nm à 1050nm ou alternativement de 1050nm à 1200nm.

10. Procédé selon l'une quelconque des revendications précédentes, dans lequel ladite surface de fixation (20) est substantiellement non-adhésive préalablement aux-dites transitions de phase de ladite surface de fixation (20).

11. Procédé selon l'une quelconque des revendications précédentes, dans lequel ladite bande (22) à ladite surface de fixation (20), au moins après avoir été irradiée par de la radiation électromagnétique de ladite première longueur d'onde ou plage de longueur d'onde, présente une transmission d'au moins 60%, préférablement de 70%, plus préférablement de 80% et encore plus préférablement de 90% de radiation électromagnétique d'arrivée de ladite deuxième longueur d'onde ou plage de longueur d'onde,

12. Procédé selon l'une quelconque des revendications précédentes, dans lequel ladite bande (22) à ladite surface de fixation (20), au moins avant d'être irradiée par de la radiation électromagnétique de ladite première longueur d'onde ou plage de longueur d'onde, présente une absorbance dau moins 60%, préférablement de 70%, plus préférablement de 80% et encore plus préférablement de 90% de radiation électromagnétique d'arrivée de ladite première longueur d'onde ou plage de longueur d'onde.
